(19) **Europäisches Patentamt / European Patent Office / Office européen des brevets**

(11) **EP 1 752 914 A1**

(12) **EUROPEAN PATENT APPLICATION**
published in accordance with Art. 158(3) EPC

(43) Date of publication:
**14.02.2007 Bulletin 2007/07**

(21) Application number: **05737276.5**

(22) Date of filing: **09.05.2005**

(51) Int Cl.:
**G06K 19/00** (2006.01)    **G06F 1/00** (2006.01)
**H02J 17/00** (2006.01)

(86) International application number:
**PCT/JP2005/008433**

(87) International publication number:
**WO 2005/116914 (08.12.2005 Gazette 2005/49)**

(84) Designated Contracting States:
**DE FR GB**

(30) Priority: **31.05.2004 JP 2004161104**

(71) Applicant: **SHARP KABUSHIKI KAISHA**
**Osaka-shi, Osaka 545-8522 (JP)**

(72) Inventors:
• **MARUSHIMA, Yoshinari**
**Tenri-shi,**
**Nara 6320018 (JP)**

• **OKAMOTO, Junichi**
**Nara-shi, Nara 6310801 (JP)**
• **SHIGEMASA, Haruhiko**
**Kohriyama-shi,**
**Nara 6391044 (JP)**
• **MORI, Haruya**
**Tenri-shi,**
**Nara 6320071 (JP)**

(74) Representative: **Brown, Kenneth Richard**
**R.G.C. Jenkins & Co.**
**26 Caxton Street**
**London SW1H 0RJ (GB)**

(54) **NON-CONTACT IC CARD**

(57)    There is provided a non-contact IC card having a power supply circuit capable of stably receiving power even if power consumption is varied after the power supply object circuit is switched to normal operation. The non-contact IC card includes : an antenna (11) for receiving an electromagnetic wave, a rectifier circuit (12) for rectifying AC current generated from the electromagnetic wave received by the antenna (11), a regulator (13) for regulating DC voltage VIN outputted from the rectifier circuit (12), a control circuit (15) for receiving power from the regulator (13) and executing a predetermined function, and a voltage detection circuit (14) for detecting the output voltage VIN of the rectifier circuit (12). According to the result of detection of the output voltage VIN from the rectifier circuit (12), the voltage detection circuit (14) resets or releases reset of the control circuit (15).

Fig. 1

**Description**

TECHNICAL FIELD

The present invention relates to a non-contact type IC card for receiving an electromagnetic wave and being supplied with a power supply using the effect of electromagnetic induction, and more particularly to an action stabilizing technology for stabilizing the action of supplying a non-contact IC card with power.

BACKGROUND ART

Non-contact IC cards have been provided for receiving a power supply through an electromagnetic wave from an external apparatus using the effect of electromagnetic induction, where their internal source voltage depends largely on the distance from the external apparatus. It is hence necessary to examine whether or not the source voltage regulated to a constant level by a constant voltage producing circuit such as a regulator can be supplied to a level enough for driving a control circuit such as a CPU in the IC card. The control circuit such as a CPU (central processing unit) is a target to which the power supply is delivered from the regulator.

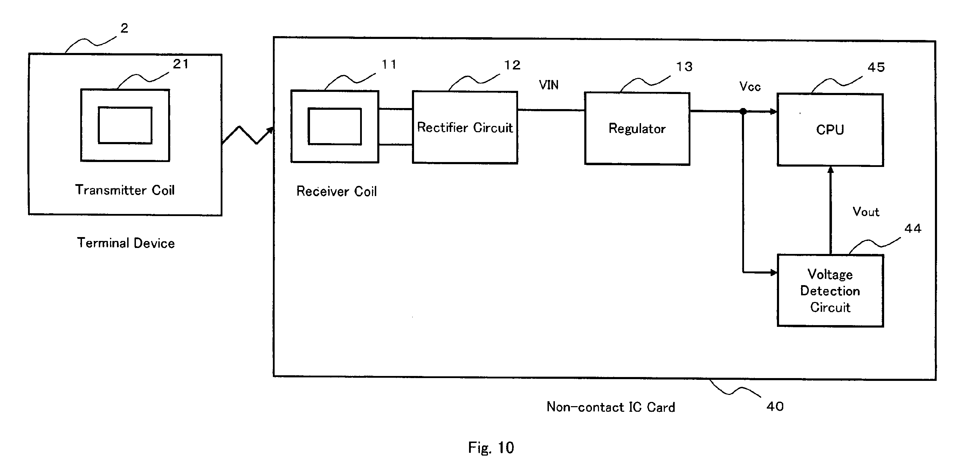

One of means for satisfying the foregoing requirement is the following technology (referred to as Prior Art 1 hereinafter) as described below. Fig. 10 is a block diagram schematically showing a circuitry arrangement of the power source in a non-contact IC card 40 as Prior Art 1. As shown, a terminal device 2 (an external apparatus) is provided for transmitting an electromagnetic wave as a power supply with a transmitter coil 21. The non-contact IC card 40 receives the electromagnetic wave with a receiver coil 11 which acts as a receiver antenna, rectifies an alternating power generated by the receiver coil 11 with a rectifier circuit 12, and regulates the rectified power to a constant voltage with a regulator (constant voltage producing circuit) 13. The output voltage Vcc from the regulator 13 is monitored by a voltage detection circuit 44 which compares the output voltage Vcc with a predetermined reference level, and, when judging that the output voltage Vcc is at a level enough to permit the action of a CPU 45, releases a determination signal to release the reset state of the CPU 45.

The action of the circuitry arrangement at the power source in the non-contact IC card 40 shown in Fig. 10 will now be explained. When the non-contact IC card 40 comes close to the transmitter coil 21 in the terminal device 2 which emits an electromagnetic wave, the non-contact IC card 40 receives the electromagnetic wave from the transmitter coil 21 with the receiver coil 11 which in turn produces an alternating current through the effect of electromagnetic induction. The alternating current is then rectified by the rectifier circuit 12 and regulated to a constant voltage by the regulator 13. Particularly as the non-contact IC card 40 comes closer to the transmitter coil 21 in the terminal device 2, the alternating voltage produced on the receiver coil 11 will increase. While the non-contact IC card 40 comes not close to the transmitter coil 21, the output voltage Vcc from the regulator 13 does not reach a predetermined level and remains lower than the level enough to drive the CPU 45. Even when the non-contact IC card 40 comes further close to the transmitter coil 21 after the non-contact IC card 40 has come closer to the transmitter coil 21 enough to elevate the output voltage Vcc from the regulator 13 to the predetermined level, the output voltage Vcc remains controlled to the predetermined level by the regulator 13, and outputted as the output voltage Vcc which is regulated to a constant voltage. For notifying the CPU 45 that the source voltage condition is established so as to start the action of the CPU 45, the output voltage Vcc from the regulator 13 is monitored by the voltage detection circuit 44, which is arranged to, when the output voltage Vcc reaches a predetermined level, release a determination signal for commanding the CPU 45 to release the reset state. In response, the CPU 45 starts a predetermined action.

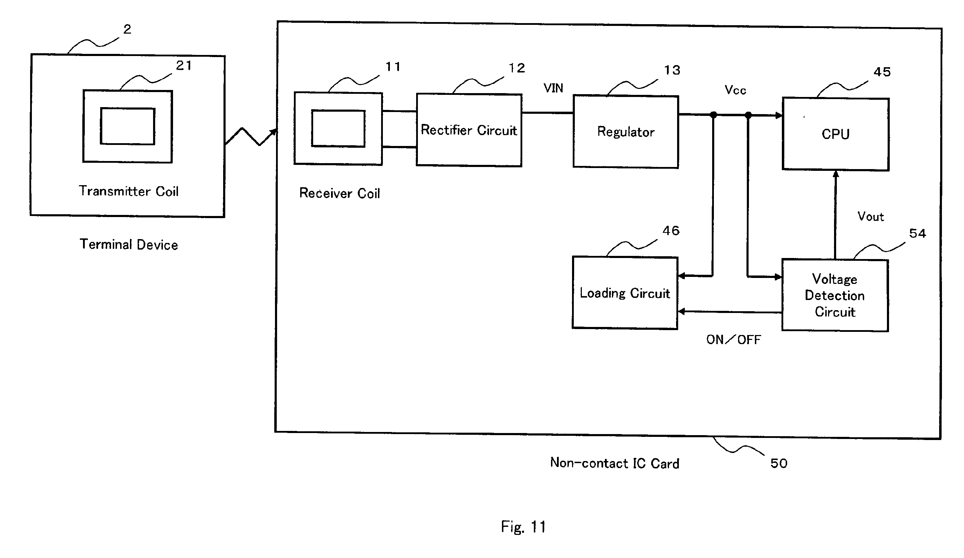

Fig. 11 illustrates a circuitry arrangement at the source of a conventional non-contact IC card (referred to as Prior Art 2 hereinafter) which is a modification of the non-contact IC card disclosed in Prior Art 1. Prior Art 2 is disclosed in Patent Document 1, for example. A non-contact IC card 50 of Prior Art 2 has a voltage detection circuit 54 arranged to release the reset state of a control circuit such as a CPU 45, which requires a predetermined voltage for conducting its action and its power consumption is greater during the action than during the stop, when a source (a regulator 13) has turned to a ready state for stably providing the power supply, thereby improving the stability of the control circuit. More particularly, unlike the non-contact IC card 40 of Prior Art 1 shown in Fig. 10, the non-contact IC card 50 of Prior Art 2 shown in Fig. 11 includes a loading circuit 46 controllably switched on and off by the voltage detection circuit 54 for simulating the maximum of the power supply for the control circuit such as the CPU 45 when switched on. The circuitry arrangement at the source of the non-contact IC card 50 of Prior Art 2 will be described below.

When the non-contact IC card 50 comes close to the transmitter coil 21 in a terminal device 2 which emits an electromagnetic wave, the non-contact IC card 50 receives the electromagnetic wave from the transmitter coil 21 at the receiver coil 11 which in turn produces an alternating current through the effect of electromagnetic induction. The alternating current is then rectified by a rectifier circuit 12 and regulated to a constant voltage by a regulator 13. Particularly as the non-contact IC card 50 comes closer to the transmitter coil 21 in the terminal device 2, the alternating voltage produced on the receiver coil 11 will increase. Accordingly, while the non-contact IC card 50 comes not close to the transmitter coil 21, the output voltage Vcc from the regulator 13 is not at a predetermined level and remains lower than the level enough to drive the CPU 45. The output voltage Vcc from the regulator 13 is monitored by the voltage detection circuit 54. The voltage detection circuit 54 compares the output voltage Vcc from the regulator 13 with a reference voltage VA to determine whether or not the output voltage Vcc is greater than or equal to the reference voltage VA and release its decision as a determination signal.

The loading circuit 46 is connected to the output of the regulator 13 and remains at the on state by the determination signal of the voltage detection circuit 54 when the CPU 45 is at the reset state in which the CPU 45 has not started its action, i.e., the output voltage Vcc is lower than the reference voltage VA, so as to consume power equal to or greater than the current at the maximum loading of the CPU 45 (the maximum consumption current). The loading circuit 46 may be implemented simply by a series circuit of a resistor and a switching element such as a transistor connected to the output of the regulator 13, in which the switching element can be turned on and off by the determination signal from the voltage detection circuit 54. When the non-contact IC card 50 remains not starting the terminal device 2 or the loading circuit 46 is not at the on state with its switching element held at the off state, the power consumption of the loading circuit 46 is zero or a very small level. As the non-contact IC card 50 comes close to the transmitter coil 21 in the terminal device 2, the loading circuit 46 is shifted to the on state with its switching element switched on. When the output voltage Vcc exceeds the reference voltage VA with the non-contact IC card 50 coming closer to the transmitter coil 21 in the terminal device 2, the voltage detection circuit 54 releases the determination signal for commanding the loading circuit 46 to stop the loading action and disconnect the switching element for stop the power consumption while commanding the CPU 45 to release the reset state.

In response to the determination signal indicating that the output voltage Vcc at the action of the loading circuit 46 exceeds the reference voltage VA, the voltage detection circuit 54 directly commands the CPU 45 to release the reset state and the loading circuit 46 to stop the action at once. As the result, the source voltage Vcc will not decline by the startup of the action of the CPU 45 but remain stable for power supply.

Patent Document 1 : Japanese Patent Laid-Open Publication No. Hei8-30752.

DISCLOSURE OF INVENTION

PROBLEMS TO BE SOLVED BY THE INVENTION

However, both Prior Arts 1 and 2 have the following problems. First, Prior Art 1 fails to provide the satisfactory result in the action of an IC card at stability. More particularly, when the regulator reaches to a certain level of its output voltage, the voltage detection circuit releases the reset state of the CPU. When the power supply capability is low, the CPU starts the action after the reset state is released, increasing its power consumption and causing the output voltage of the regulator to decline, and then such decline is detected by the voltage detection circuit and may hence return back to the reset state. As the result, the CPU can operate at less stability until the output current from the regulator reaches to a high level enough to conduct the action of the CPU.

For eliminating the drawback of Prior Art 1, an attempt of Prior Art 2 is proposed for improving the arrangement of a non-contact IC card of Prior Art 1 by connecting the output of the regulator additionally with a loading circuit for consuming a power which is greater than the maximum of power consumption of the control circuit such as a CPU, whereby when the output voltage Vcc from the regulator exceeds the detection voltage VA of the voltage detection circuit and the action of the control circuit such as a CPU becomes stable, the voltage detection circuit turns the loading circuit off, hence releasing the reset state of the control circuit such as a CPU. Accordingly, as Prior Art 2 improves the action of the CPU at stability, it still has the following drawbacks.

The loading circuit in Prior Art 2 is designed for consuming a power greater than the maximum level of power consumption of the CPU and has to estimate precisely the maximum level of the power consumption of the CPU, whereby the CPU may be unstable in the action when its power consumption is greater than that of the loading circuit due to variations in the maximum level of the power consumption.

Also, since the power consumption of the loading circuit in Prior Art 2 is greater than the maximum level of the power consumption of the CPU, if its timing for turning on and off is misconducted, the loading circuit may turn on at the same time as the CPU turns on, hence abruptly increasing the load to the regulator and rapidly decreasing the output voltage of the regulator. It is therefore needed to positively turn the loading off prior to or at the timing of releasing the reset state of the CPU.

Moreover, the power source in a non-contact IC card comprises commonly a rectifier circuit for rectifying an alternating current generated on the receiver coil and a constant voltage regulating circuit provided such as a regulator for regulating the output voltage from the rectifier circuit into a constant level while the output voltage from the regulator to be received as a power supply by the control circuit such as a CPU is directly monitored in both Prior Arts 1 and 2. Although the advantage is that the output voltage needed for enabling the action of the control circuit such as a CPU is directly monitored, the drawback is that, when the loading is low, the current supply capability of the regulator cannot be directly examined from the output voltage. Accordingly, when the current supply capability of the regulator is insufficient with the output voltage of the regulator remaining higher than a desired reference level, the output voltage of the regulator or the source voltage for the control circuit such as a CPU will decline as the current for the action of the control circuit increases, which may lead to interrupting the action. For compensation, the loading circuit in Prior Art 2 has to be arranged to consume a power greater than the maximum level of the power consumption of the control circuit such as a CPU in order to identify the timing of releasing the reset state of the control circuit.

The present invention has been developed in view of the foregoing aspects and its object is to provide a non-contact IC card which includes a power source circuit for receiving a power supply at stability even if the power consumption is varied after a circuit to be supplied with power has shifted to the common action mode.

MEANS FOR SOLVING THE PROBLEM

As a first feature of the present invention for achievement of the above object, a non-contact IC card according to the present invention includes an antenna for receiving an electromagnetic wave, a rectifier circuit for rectifying an alternating current generated from the electromagnetic wave received by the antenna, a regulator for regulating the direct-current voltage outputted from the rectifier circuit to a constant level, a control circuit for receiving power supply from the regulator and executing a predetermined function, and a voltage detection circuit for detecting the output voltage of the rectifier circuit, wherein the voltage detection circuit resets the control circuit or releases a reset state of the control circuit according to a detection result of the output voltage from the rectifier circuit. Preferably, the voltage detection circuit may be arranged to turn the control circuit to the reset state when the output voltage of the rectifier circuit is lower than or equal to a predetermined reference level.

The first feature of the present invention allows the voltage detection circuit to detect the output voltage of the rectifier circuit thus to estimate both the output voltage and the current supply capability of the regulator. When the regulator is compared between the input voltage and the output voltage, its output voltage is generally lower than the input voltage unless the regulator includes a booster circuit. When the regulator remains controlled for regulating the output voltage to a constant level, while its output voltage remains constant as its load increases, its input voltage or the output voltage of the rectifier circuit will decline as the load on the rectifier circuit increases. In general, the higher the input voltage of the regulator is, the higher its current supply capability is, though its input voltage will decline as the load increases, its output voltage remains constant or constant substantially. Since the voltage detection circuit in the non-contact IC card of the first feature of the present invention detects the output voltage of the rectifier circuit and upon judging that the current supply capability of the regulator is high enough to respond to any increase in the power consumption after the release of the reset state of the control circuit (for example, a CPU) to be supplied with power, releases the reset state of the control circuit, the power supply from the regulator can be stable even when the power consumption is increased by the control circuit carrying out the predetermined function after the release of the reset state.

The non-contact IC card according to the present invention modified as a second feature further includes a filter circuit that, when the waveform of the output voltage of the rectifier circuit includes frequency components of the electromagnetic wave or harmonic components of the frequency components, can remove at least the frequency components or the harmonic components, wherein the voltage detection circuit detects the output voltage of the rectifier circuit that has been passed through the filter circuit.

The second feature of the present invention allows the frequency components of the electromagnetic wave received by the antenna or the harmonics of the frequency components included in the waveform of the output voltage of the rectifier circuit to be successfully removed as alternating noise components, whereby the voltage detection circuit can detect the output voltage of the rectifier circuit at stability. As the result, the voltage detection circuit can avoid any erratic action, hence positively releasing the reset state of the control circuit.

The non-contact IC card according to the present invention modified as a third feature further includes a loading circuit arranged to be controllably turned on and off by the control circuit, the loading circuit receiving the power supply from the regulator and consuming constant power at an on state, wherein the control circuit is arranged to turn the loading circuit on after a reset state of the control circuit is released by the voltage detection circuit, turn the loading circuit off further after a lapse of a certain period, and carry out the predetermined function, and the power consumption of the loading circuit is set so that the sum of the power consumption of the loading circuit and the power consumption of the control circuit for a certain period after the reset state is released is greater than or equal to the maximum level of the power consumption of the control circuit.

The non-contact IC card according to the present invention modified as a fourth feature further includes a loading circuit arranged to be controllably turned on and off by the voltage detection circuit, the loading circuit receiving the power supply from the regulator and consuming constant power at an on state, wherein the voltage detection circuit is arranged to turn the loading circuit on after releasing a reset state of the control circuit and turn the loading circuit off further after a lapse of a certain period, the control circuit is arranged to carry out the predetermined function after the lapse of a certain period from the release of the reset state of the control circuit by the voltage detection circuit, and the power consumption of the loading circuit is set so that the sum of the power consumption of the loading circuit and the power consumption of the control circuit for a certain period after the reset state is released is greater than or equal to the maximum level of the power consumption of the control circuit.

The third or fourth feature of the present invention allows the control circuit to be inhibited from starting the predetermined function when the current supply capability of the regulator remains not reaching its level for allowing the control circuit to conduct the predetermined function after the voltage detection circuit releases the reset state of the control circuit according to the detection result of the output voltage from the rectifier circuit. More specifically, since the control circuit remains not starting its main function with insufficient power supply, it can be prevented the control circuit from falling into an unrecoverable inoperative state when its voltage supply unwillingly declines by a shortage of the current supply capability of the regulator. Also, even when the reset state of the control circuit is released with the current supply capability of the regulator remaining below its favorable level, the maximum level of the power consumption of the control circuit is practically simulated during a certain period at the on state of the loading circuit. Therefore, when the current supply capability of the regulator is at the unfavorable level, the output voltage of the rectifier circuit declines in accordance with the current supply capability of the regulator regardless of the declination of the output voltage of the regulator, thus permitting the control circuit to return to its reset state before starting the predetermined function. As the result, the advantageous effect can be obtained even if the action of the voltage detection circuit for judging the current supply capability of the regulator from the output voltage of the rectifier circuit is not high in the accuracy. Moreover, unlike the prior art, since the power consumption of the loading circuit is set to not a level greater than or equal to the maximum of the power consumption of the control circuit, but a difference between the maximum level of the power consumption of the control circuit and the power consumption for a certain period before the predetermined function is started by the control circuit, its actual value can be as small as compensating a variation in the difference. In other words, a variation in the maximum level of the power consumption of the control circuit and a variation in the power consumption for a certain period are correlated so that one is increased as the other increases. Since the variation in the difference is more controllable in suppression than the variation in the maximum level of the power consumption, the power consumption of the loading circuit can be improved in the accuracy of the setting thus allowing the control circuit to start the predetermined function after the current supply capability of the regulator has reached at its favorable level for the maximum of the power consumption of the control circuit.

According to the third or fourth feature of the present invention, the action of controlling the timing for turning either the loading circuit or the control circuit on is unnecessary and no circuitry arrangement is needed for precisely controlling the timing for turning the loading circuit on and off.

According to the third or fourth feature of the present invention, the voltage detection circuit may be arranged to detect the output voltage of the regulator and reset the control circuit or release the reset state of the control circuit according to the detection result, whereby the advantageous effect of the loading circuit in the third or fourth feature is ensured with equal success.

BRIEF DESCRIPTION OF DRAWINGS

Fig. 1 is a block diagram of a non-contact IC card schematically showing the first embodiment of the present invention.
Fig. 2 is a circuitry diagram of an arrangement of the voltage detection circuit employed in the non-contact IC card according to the present invention.
Fig. 3 is a circuitry diagram of another arrangement of the voltage detection circuit employed in the non-contact IC card according to the present invention.
Fig. 4 is a flowchart schematically showing the action at the power source of the non-contact IC card of the first embodiment of the present invention.
Fig. 5 is a profile showing a temporal transition of the power consumption in the non-contact IC card of the first embodiment of the present invention.
Fig. 6 is a block diagram of a non-contact IC card schematically showing the second embodiment of the present invention.
Fig. 7 is a block diagram of a non-contact IC card schematically showing another embodiment of the present invention.

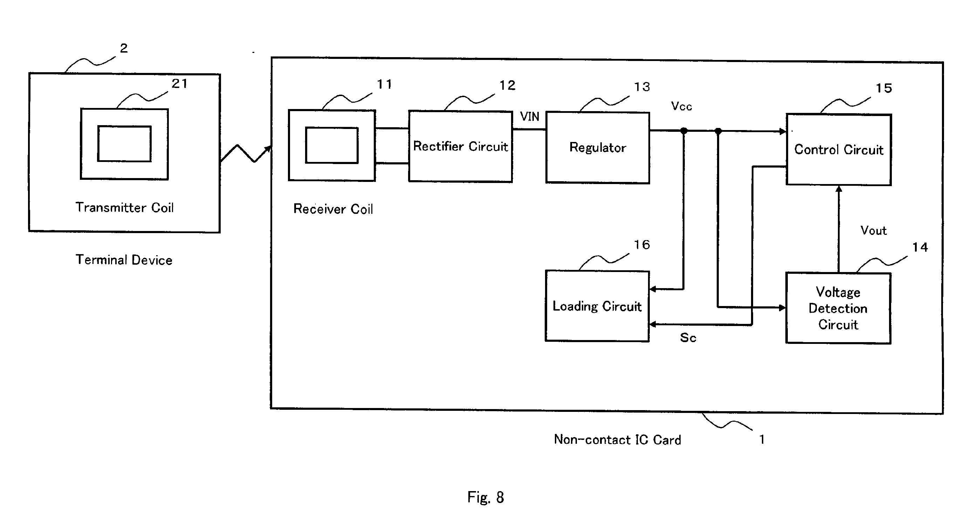

Fig. 8 is a block diagram of a modification of the non-contact IC card of the first embodiment of the present invention.
Fig. 9 is a block diagram of a modification of the non-contact IC card of the second embodiment of the present invention.
Fig. 10 is a block diagram schematically showing a conventional non-contact IC card (Prior Art 1).
Fig. 11 is a block diagram schematically showing another conventional non-contact IC card (Prior Art 2).

EXPLANATION OF REFERENCES

| | |
|---|---|
| 1: | non-contact IC card according to the present invention |
| 2: | terminal device |
| 11: | receiver coil |
| 12 : | rectifier circuit |
| 13: | regulator (constant voltage producing circuit) |
| 14, 24, 34: | voltage detection circuit |
| 15, 25, 35 : | control circuit |
| 16, 36 : | loading circuit |
| 17 : | comparator |
| 18 : | filter circuit |
| 19 : | voltage transformer |
| 21: | transmitter coil |
| 40, 50: | conventional non-contact IC card |
| 44, 54: | voltage detection circuit |
| 45: | CPU |
| 46 : | loading circuit |
| VIN : | output voltage of the rectifier circuit |
| VIN': | positive input voltage of the comparator |
| Vref : | negative input voltage of the comparator |
| Vcc: | output voltage of the regulator |
| Vout : | reset output |
| Vout' : | output voltage of the comparator |
| VA' : | reference voltage of the voltage detection circuit |
| Sc: | control signal for controllably turning the loading circuit on and off |
| R1, R2: | feedback resistor |
| R3 : | resistor |
| C1: | capacitor |
| P0 : | power consumption for a certain period after the release of the reset state of the control circuit |
| P1 : | power consumption of the loading circuit |
| Pmax: | maximum power consumption of the control circuit |
| T: | a certain period after the release of the reset state |

BEST MODE FOR CARRYING OUT THE INVENTION

Embodiments of the present invention will explicitly be described in the form of a non-contact IC card (referred to as the inventive IC card hereinafter) referring to the relevant drawings. Throughout the description and the drawings, common numerals denote common components and signals of the inventive IC card to those of the conventional non-contact IC card.

(First Embodiment)

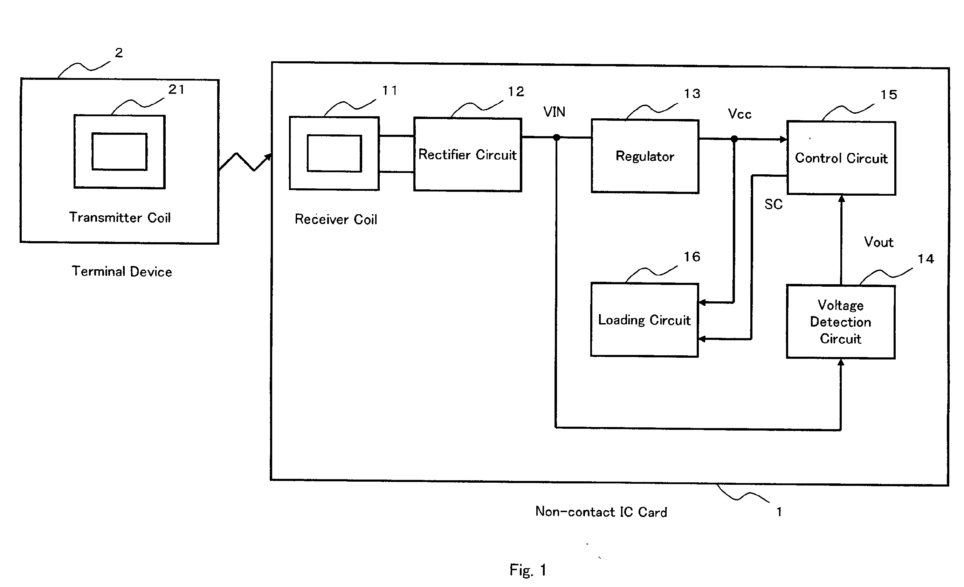

Fig. 1 is a block diagram schematically showing an inventive IC card 1 of the first embodiment. As shown in Fig. 1, the inventive IC card 1 comprises a receiver coil 11 provided as an antenna for receiving the electromagnetic wave transmitted from an external terminal device 2 for a power supply, a rectifier circuit 12 for rectifying an alternating current generated from the electromagnetic wave received by the receiver coil 11, a regulator 13 provided as a constant voltage producing circuit for regulating the direct current voltage VIN outputted from the rectifier circuit 12 to a constant level which is then released as a source voltage Vcc to be used in the inventive IC card 1, a voltage detection circuit 14 for detecting the output voltage VIN of the rectifier circuit 12, a control circuit 15 provided with the power supply from the regulator 13 for conducting the predetermined function, and a loading circuit 16. The terminal device 2 provided at the outside of the inventive IC card 1 includes a transmitter coil 21 arranged as an antenna for transmitting the electromagnetic wave as the power supply to the inventive IC card 1. Shown in Fig. 1 is a power source circuit in the inventive IC card 1 where the control circuit 15 for executing the main process of the inventive IC card 1 may be implemented by a CPU or the like, similar to that of the conventional non-contact IC card, of which the peripheral circuitry arrangement (including a memory) is identical to that of the conventional IC card and will be explained in no more detail.

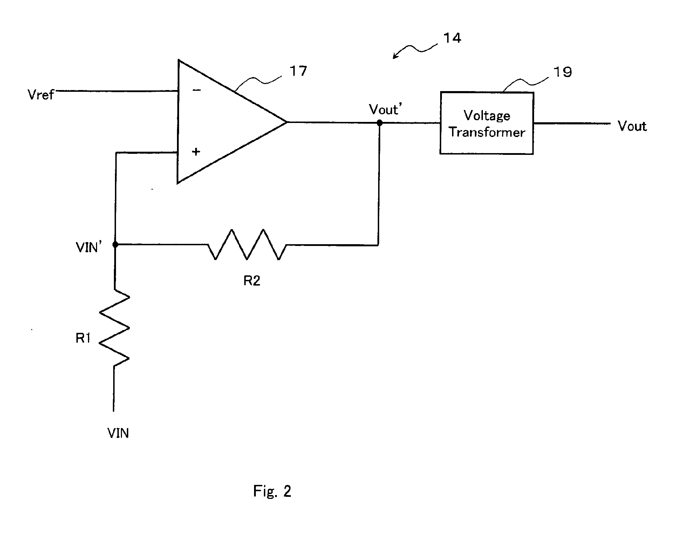

The voltage detection circuit 14 is provided for detecting the output voltage VIN of the rectifier circuit 12 and resetting the control circuit 15 or releasing the reset state of the control circuit 15 according to its detection result. More specifically, when the output voltage VIN exceeds a reference level VA', the voltage detection circuit 14 detects the voltage condition (VIN>VA') and releases the reset state of the control circuit 15. The voltage detection circuit 14 may be implemented by a combination of a comparator having such a profile of hysteresis as shown in Fig. 2 and a voltage transformer for converting the output voltage VIN to a desired level Vcc. The voltage transformer may be preferably of level shifter type. The output voltage VIN of the rectifier circuit 12 is also used as a source voltage for the voltage detection circuit 14.

When the output voltage VIN of the rectifier 12 is lower than the reference level VA', the output voltage Vout' of the comparator 17 remains at the grounding level and the input voltage VIN' received by the positive input of the comparator 17 is expressed as VIN1' in Equation 1. This represents the reset state. Also, as the input voltage Vref received by the negative input of the comparator 17 is determined by comparing between the output voltage VIN and the reference voltage VA', VIN in Equation 1 is substituted with VA' as shown in Equation 2.

When VA'>VIN is given, the output voltage Vout' from the comparator 17 remains at the grounding level thus ensuring the reset state. When the output voltage VIN is increased and its relationship is turned to VA'<VIN, the output voltage Vout' from the comparator 17 shifts to VIN thus to releasing the reset state. It is now assumed that VIN' at the reset state is denoted by VIN2 as shown in Equation 3. The terms r1 and r2 in Equations 1 and 2 are the resistances of feedback resistors R1 and R2 respectively.

$$\text{VIN1'} = \text{VIN} \times \text{r2}/(\text{r1+r2}) \qquad \text{(Equation 1)}$$

$$\text{Vref} = \text{VA'} \times \text{r2}/(\text{r1+r2}) \qquad \text{(Equation 2)}$$

$$\text{VIN2'} = \text{VIN} \qquad \text{(Equation 3)}$$

Once VA'<VIN has been established for releasing the reset state, the reset state remains released until VIN declines to a level lower than Vref. This is determined by the profile of hysteresis (VIN-Vref).

Since the hysteresis is preset, the voltage detection circuit 14 can be prevented from inconsistently repeating the reset and release of the reset state due to the effect of a noise superimposed on the output voltage VIN of the rectifier circuit 12 or the effect of other noises.

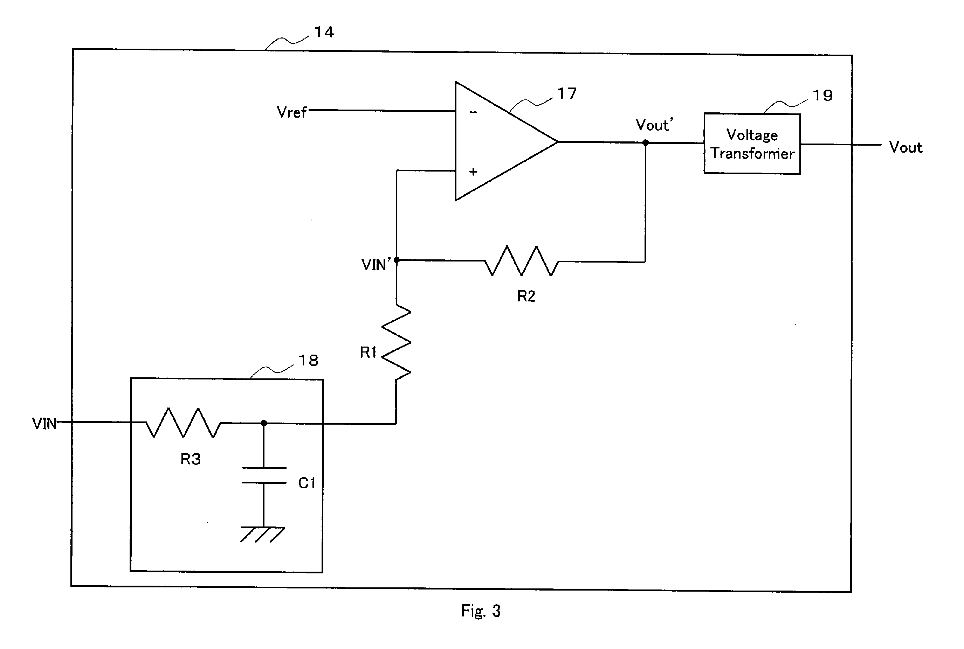

The output voltage VIN of the rectifier circuit 12 may be a ripple current in which noises at frequencies or harmonics of the electromagnetic wave received by the receiver coil 11 are superimposed on its waveform, depending on the circuitry arrangement of the rectifier circuit 12. It is desired for eliminating the frequency components or harmonic components to connect the negative input of the comparator 17, shown in Fig. 2, with a filter circuit 18 for removing the noise components from the waves as shown in Fig. 3. As shown in Fig. 3, the filter circuit 18 is preferably of a lowpass filter type comprising a resistor R3 and a capacitor C1. Particularly in case that the rectifier circuit 12 comprises a full-wave rectifier circuit having a diode bridge of shot-key diodes in which the harmonic components in the electromagnetic wave received by the receiver coil 11 will possibly remain, the lowpass filter is connected preferably with either the rectifier circuit 12 or the voltage detection circuit 14 or between the rectifier circuit 12 and the voltage detection circuit 14. The filter circuit 18 is not limited to the circuitry arrangement shown in Fig. 3.

The control circuit 15 is provided for, in addition to executing the main process of the inventive IC card 1, turning the loading circuit 16 on after the reset state is released by the voltage detection circuit 14, starting the count of time for a certain period from the release of the reset state, and after the certain period, turning the loading circuit 16 off and starting the above-described main process. During the certain period after the release of the reset state, the control circuit 15 conducts the predetermined function while turning the loading circuit 16 on as well as carrying out the standard actions, thus consuming a power P0. The count of time for the certain period is conducted by a timer circuit (not shown) which may be installed in the control circuit 15 or separately provided.

When turned on by the control circuit 15, the loading circuit 16 consumes a power P1 from the power supply of the regulator 13. A sum (P0+P1) of the power consumption P1 of the loading circuit 16 and the power consumption P0 of the control circuit 15 for the certain period is predetermined so as to exceed a maximum power consumption Pmax after the start of the main process of the control circuit 15. Also, since the power consumption P1 of the loading circuit 16 only has to be not smaller than a difference between the maximum power consumption Pmax and the power consumption P0 for the certain period, it is preset not to exceed the maximum power consumption Pmax.

The loading circuit 16 may be implemented by the following arrangement. A first example of the loading circuit comprises a MOSFET element. The MOSFET element is connected at the drain to the output of the regulator 13 for transferring a current from the regulator 13 to another circuit or the grounding potential via the MOSFET element and the gate voltage of the MOSFET element is controlled by a control signal Sc from the control circuit 15 for switching the MOSFET element on and off. The power consumption of this loading circuit can hence be determined by the transistor size of the MOSFET element. A second example of the loading circuit comprises a series circuit of a MOSFET element and a resistor connected in series. In the latter case, the series circuit is connected at one end to the output of the regulator 13 and at the other end to the grounding potential. The gate voltage of the MOSFET element is controlled by a control signal Sc from the control circuit 15 for switching the MOSFET element on and off. The power consumption of the loading circuit 16 can be determined by the transistor size of the MOSFET element and the resistance of the resistor. A third example of the loading circuit comprises a logic element or a logic circuit having a combination of logic elements. The output voltage Vcc of the regulator 13 is used as a source voltage for the logic element while the control signal Sc from the control circuit 15 is received by one of the inputs of the logic element. Accordingly, the loading circuit 16 consumes a power through conducting its action, for example, at equal intervals, in response to the input level of the control signal Sc.

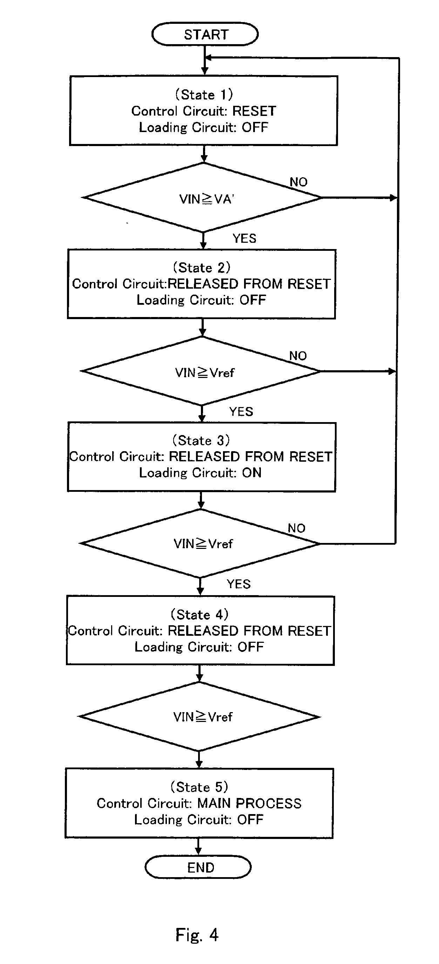

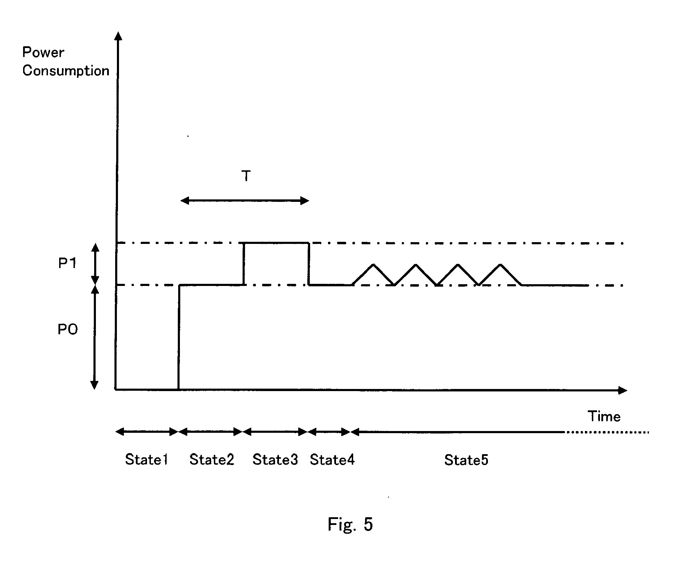

The action at the power source of the inventive IC card 1 shown in Fig. 1 will be described referring to an action flowchart of Fig. 4 and a temporal profile of the power consumption of Fig. 5.

When the inventive IC card 1 comes close to the transmitter coil 21 in the terminal device 2 which emits the electromagnetic wave, its receiver coil 11 receives the electromagnetic wave emitted from the transmitter coil 21 and generates an alternating current through the effect of electromagnetic induction. The alternating current is rectified by the rectifier circuit 12 which in turn releases a output voltage VIN. The output voltage VIN is regulated to a constant level Vcc by the regulator 13 before transferred to the control circuit 15. As the inventive IC card 1 comes closer to the transmitter coil 21 in the terminal device 2, the alternating current output generated on its receiver coil 11 increases in the voltage. When the inventive IC card 1 comes not close to the transmitter coil 21, the output voltage Vcc from the regulator 13 remains not at a minimum level of the voltage required for driving the control circuit 15 and its output is too lower to start the action of the control circuit 15 (State 1). At State 1, the control circuit 15 remains at the reset state and its power consumption is zero or a very low level. When the control circuit 15 is at the reset state, the loading circuit 16 remains not activated with the output voltage VIN of the rectifier circuit 12 held below the reference voltage VA' and its power consumption is zero or a very low level.

The voltage detection circuit 14 is provided for constantly monitoring the voltage level and current supply capability of the output voltage Vcc according to the output voltage VIN of the rectifier circuit 12. When the inventive IC card 1 comes closer to the transmitter coil 21 in the terminal device 2 and the alternating output of the receiver coil 11 is increased in the voltage, the output voltage VIN of the rectifier circuit 12 increases. When the input voltage VIN exceeds the reference voltage VA', the voltage detection circuit 14 judges that the regulator 13 is ready to stably supply the control circuit 15 with the power and releases the reset state of the control circuit 15 (State 2). More specifically, the output voltage Vout from the voltage detection circuit 14 shifts to the high level.

When the control circuit 15 is released from the rest state, its action shifts to a mode with the power consumption P0. If the current supply capability of the regulator 13 is low, the output voltage VIN of the rectifier circuit stays below the reference voltage Vref and in response, the voltage detection circuit 14 commands the control circuit 15 to return from the reset-released state (State 2) to the reset state (State 1).

When the control circuit 15 has been released from the reset state, the output voltage VIN exceeds the reference voltage Vref and the control signal Sc from the control circuit 15 allows the loading circuit 16 to turn from the stopped state to the on state for producing the power consumption P1 (State 3). While the control circuit 15 stays at the state for producing the power consumption P0, the regulator 13 is loaded by the sum (P0+P1) of the power consumption of the control circuit 15 and the power consumption of the loading circuit 16. Upon released from the reset state, the control circuit 15 measures a certain period T from the release of the reset state (State 2) and holds the loading circuit 16 turned on during the certain period T. The voltage detection circuit 14 consistently monitors the voltage level and current supply capability of the output voltage Vcc according to the output voltage VIN of the rectifier circuit 12. When the power consumption P1 of the loading circuit 16 increases and exceeds the current supply capability of the regulator 13 and the output voltage VIN of the rectifier circuit 12 declines lower than the reference voltage Vref, the voltage detection circuit 14 detects such a voltage condition and shifts back the control circuit 15 from the reset-released state (State 3) to the reset state (State 1). When the control circuit 15 is turned to the reset state, the loading circuit 16 returns back to the stopped state (State 1).

When the control circuit 15 is in the reset-released state (State 3) and a certain period T has elapsed from the release of the reset with the output voltage VIN of the the rectifier circuit remaining higher than the reference level Vref , the control circuit 15 turns the loading circuit 16 off (State 4). As the loading circuit 16 is turned off, the loading to the regulator 13 becomes equal to the power consumption (P0) of the control circuit 15. This is followed by starting the main process (arithmetic process and the like) of the inventive IC card 1 (State 5). When the power consumption reaches its maximum Pmax during the usual action of the control circuit 15 at State 5, the power supply from the regulator 13 to the control circuit 15 remains stable unless the power supply from the terminal device 2 is changed, i.e. the inventive IC card 1 moves away from the terminal device 2 or the transmission of the electromagnetic wave from the terminal device 2 is stopped.

(Second Embodiment)

The second embodiment of the present invention will be described in the form of a non-contact IC card.

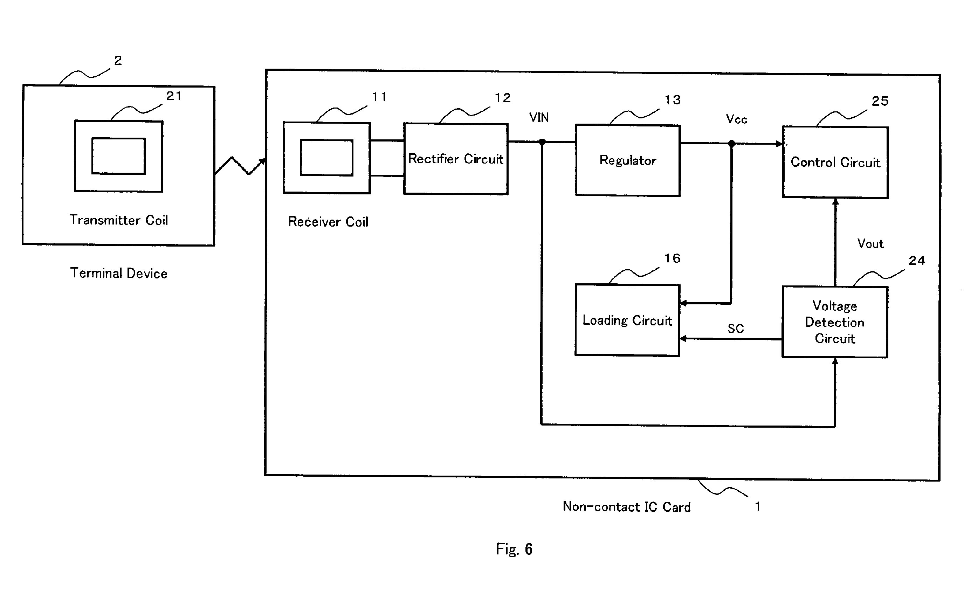

Fig. 6 schematically illustrates an arrangement of the inventive IC card 1 of the second embodiment. The inventive IC card 1 of the second embodiment shown in Fig. 6 comprises a receiver coil 11 provided as an antenna for receiving the electromagnetic wave from an external terminal device 2 for power supply, a rectifier circuit 12 for rectifying an alternating current generated from the electromagnetic wave received by the receiver coil 11, a regulator 13 provided as a constant voltage producing circuit for regulating the direct current voltage VIN outputted from the rectifier circuit 12 to a constant level which is then released as a source voltage Vcc to be used in the inventive IC card 1, a voltage detection circuit 24 for detecting the output voltage VIN of the rectifier circuit 12, a control circuit 25 provided with the power supply from the regulator 13 for conducting the predetermined function, and a loading circuit 16 connected with the regulator 13. The functions and actions of the receiver coil 11, the rectifier circuit 12, and the regulator 13 are identical to those of the inventive IC card 1 of the first embodiment shown in Fig. 1 and will be explained with no more repeat.

The second embodiment is different in some actions of the voltage detection circuit 24, the control circuit 25, and the loading circuit 16 from the inventive IC card 1 of the first embodiment shown in Fig. 1 although similar in the fundamental functions.

As equal to the voltage detection circuit 14 of the first embodiment, the voltage detection circuit 24 is provided for detecting the output voltage VIN of the rectifier circuit 12 and resetting the control circuit 25 or releasing the reset state of the control circuit 25 according to its detection result. In addition, the voltage detection circuit 24 in the second embodiment is also arranged for releasing the reset state of the control circuit 25 and turning the loading circuit 16 on upon detecting that the output voltage VIN exceeds the predetermined reference voltage VA' and for starting the count of a certain period from the release of the reset state and, after a lapse of the certain period, turning the loading circuit 16 off. The turning on and off of the loading circuit 16 is controlled by the voltage detection circuit 24 in the second embodiment while it is conducted by the control circuit 15 in the first embodiment.

The control circuit 25 is substantially identical to the control circuit 15 in the first embodiment, except that the control circuit 25 does not control the turning on and off of the loading circuit 16.

The loading circuit 16 is substantially identical to that of the first embodiment. The loading circuit 16 in the second embodiment is different from that of the first embodiment in the fact that its turning on and off is controlled by the voltage detection circuit 24.

Since the second embodiment allows the voltage detection circuit 24 to control the turning on and off of the loading circuit 16 which is conducted after releasing of the reset state by the control circuit 15 of the first embodiment, the advantageous effect at the power source of its inventive IC card can be equal to that of the first embodiment.

Other embodiments of the non-contact IC card of the present invention will then be described.

(1) While each of the foregoing embodiments provides the loading circuit 16 of which the turning on and off action can favorably be controlled to produce the power consumption P1, and allows the sum of the power consumption of the loading circuit 16 and the power consumption of the control circuit 15 or 25 to simulate a level greater than the maximum level Pmax of the power consumption of the control circuit 15 for a certain period after the release of the reset state of the control circuit 15 or 25 for judging the power supply capability of the regulator 13 prior to the start of the main process of the control circuit 15 or 25, the output voltage VIN of the rectifier 12 to be received by the voltage detection circuit 14 or 24 may be so modified in the judgment level as to undertake the judgment over the power supply capability of the voltage detection circuit 14 or 24 with no use of the loading circuit 16.

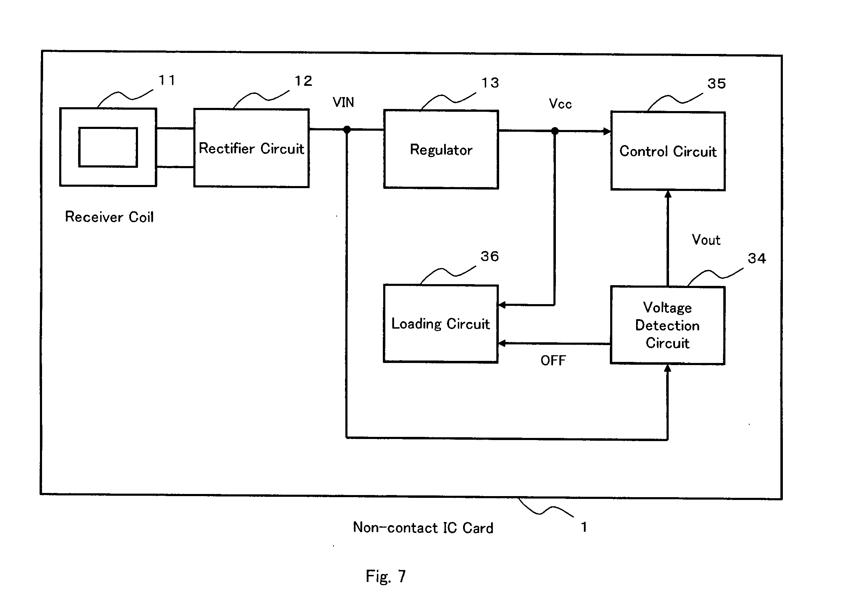

(2) The loading circuit 16 in each of the foregoing embodiments may be replaced by a loading circuit 36 which can produce power consumption greater than the maximum level Pmax of the control circuit 15 as shown in Fig. 7, similar to the loading circuit 46 of Prior Art 2. In this case, the loading circuit 36 is turned on when the control circuit 35 is at the reset state. Similar to the voltage detection circuit in each of the foregoing embodiments, the voltage detection circuit 34 detects the output voltage VIN of the rectifier circuit 12 and resets the control circuit 35 or releases the reset state of the control circuit 35 according to the detection result. In addition, the voltage detection circuit 34 turns the loading circuit 36 off when or before releasing the reset state of the control circuit 35. The turning on and off of the loading circuit 36 by the voltage detection circuit 34 is similar to that described in Prior Art 2.

(3) While the voltage detection circuit 14, 24, or 34 in each of the foregoing embodiments is implemented by a comparator having such a profile of hysteresis as shown in Fig. 2, it may be accompanied with no hysteresis. In this case, the reference voltage VA' and the input voltage Vref at the negative input of the comparator 17 are equal to each other.

(4) The voltage detection circuit 14 in the first embodiment may be modified in which the output voltage Vcc from the regulator 13 replacing the output voltage VIN of the rectifier 12 is measured and used for resetting the control circuit 15 or releasing the reset state of the control circuit 15. In this case, the voltage detection circuit 14 is supplied with the source voltage at Vcc while the voltage transformer 19 is of no use. The effect of the control circuit 15 for turning the loading circuit 16 on and off is equal to that of the first embodiment. More specifically, the control circuit 15 as in the first embodiment may start the main process when the control circuit 15 is stably connected with the power supply from the regulator 13.

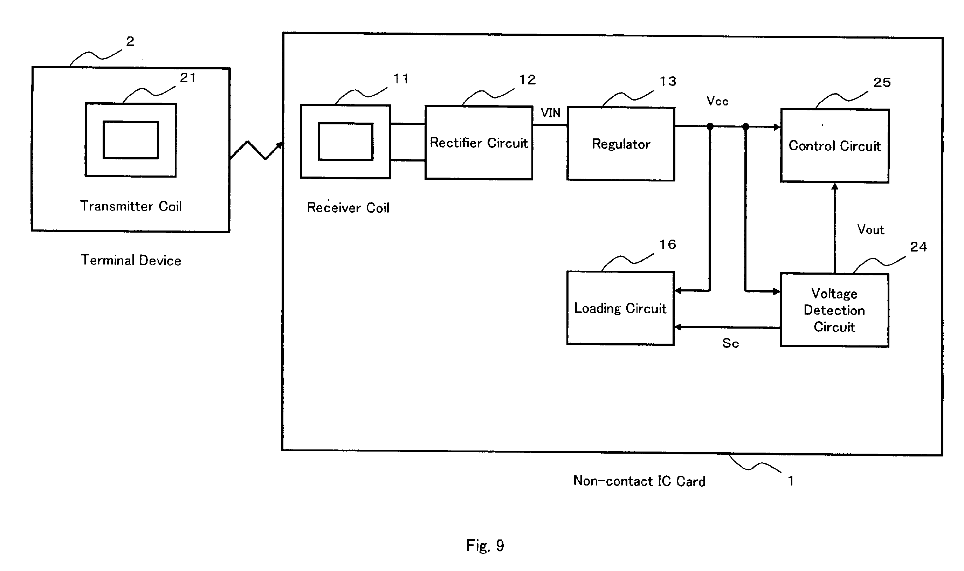

Alternatively, the voltage detection circuit 24 in the second embodiment may detect the output voltage Vcc from the regulator 13 in place of the output voltage VIN of the rectifier 12 and, according to the detection result, reset the control circuit 25 or release the reset state of the control circuit 25, as shown in Fig. 9. In this case, the voltage detection circuit 24 is supplied with the source voltage at Vcc while the voltage transformer 19 is of no use. Also, the effect of the voltage detection circuit 24 for turning the loading circuit 16 on and off is equal to that of the second embodiment. More specifically, the control circuit 25 like that of the second embodiment can start the main process when it is stably connected with the power supply from the regulator 13.

(5) While the control circuit 15, 25, or 35 of any of the foregoing embodiments may be implemented by a CPU similar to that of the conventional non-contact IC card, the control circuit 15, 25, or 35 may be arranged of any applicable arrangement with no use of the CPU. For example, the control circuit is a circuitry arrangement for input and output of data to be stored in memory elements or is provided with memory elements which require a level of voltage for memory actions. The non-contact IC card according to the present invention is applicable to a non-contact IC card including such a modification of the control circuit as described for improving the action stability of the control circuit and thus covers a range of non-contact memory cards which include no CPU.

(6) Although the non-contact IC card according to the present invention is described the case in which the IC card servers only as a non-contact type, it may be of a combination type non-contact IC card which functions as a contact type IC card.

INDUSTRIAL APPLICABILITY

The present invention is favorably applicable to a non-contact IC card for receiving an electromagnetic wave and being supplied with a power supply using the effect of electromagnetic induction and particularly useful in stabilizing the action of supplying a non-contact IC card with power.

**Claims**

1. Anon-contact IC card comprising:

    an antenna for receiving an electromagnetic wave;
    a rectifier circuit for rectifying an alternating current generated from the electromagnetic wave received by the antenna;

a regulator for regulating a direct current voltage outputted from the rectifier circuit to a constant level;
a control circuit for receiving power supply from the regulator and executing a predetermined function; and
a voltage detection circuit for detecting an output voltage of the rectifier circuit, wherein
the voltage detection circuit resets the control circuit or releases a reset state of the control circuit according to a detection result of the output voltage from the rectifier circuit.

2. The non-contact IC card according to claim 1 comprising
a filter circuit for removing at least frequency components or harmonic components when the waveform of the output voltage from the rectifier circuit includes the frequency components of the electromagnetic wave or the harmonic components of the frequency components, wherein
the voltage detection circuit detects the output voltage of the rectifier circuit that has been passed through the filter circuit.

3. The non-contact IC card according to claims 1 or 2, wherein
the voltage detection circuit turns the control circuit to a reset state when the output voltage of the rectifier circuit is lower than or equal to a predetermined reference level.

4. The non-contact IC card according to any one of claims 1 or 2 comprising
a loading circuit for receiving power supply from the regulator and consuming constant power at an on state, arranged to be controllably turned on and off by the control circuit, wherein
the control circuit is arranged to turn the loading circuit on after a reset state of the control circuit is released by the voltage detection circuit, turn the loading circuit off further after a lapse of a certain period, and carry out the predetermined function, and
power consumption of the loading circuit is set so that the sum of the power consumption of the loading circuit and power consumption of the control circuit for a certain period after the reset state is released is greater than or equal to the maximum level of the power consumption of the control circuit.

5. The non-contact IC card according to any one of claims 1 or 2 comprising
a loading circuit for receiving power supply from the regulator and consuming constant power at an on state, arranged to be controllably turned on and off by the voltage detection circuit, wherein
the voltage detection circuit is arranged to turn the loading circuit on after releasing a reset state of the control circuit, and turn the loading circuit off further after a lapse of a certain period,
the control circuit is arranged to carry out the predetermined function after the lapse of a certain period from the release of the reset state of the control circuit by the voltage detection circuit, and
power consumption of the loading circuit is set so that the sum of the power consumption of the loading circuit and power consumption of the control circuit for a certain period after the reset state is released is greater than or equal to the maximum level of the power consumption of the control circuit.

6. A non-contact IC card comprising:

an antenna for receiving an electromagnetic wave;
a rectifier circuit for rectifying an alternating current generated from the electromagnetic wave received by the antenna;
a regulator for regulating a direct current voltage outputted from the rectifier circuit to a constant level;
a control circuit for receiving power supply from the regulator and executing a predetermined function;
a voltage detection circuit for detecting an output voltage of the regulator and resetting the control circuit or releasing a reset state of the control circuit according to the detection result; and
a loading circuit for receiving power supply from the regulator and consuming constant power at an on state, arranged to be controllably turned on and off by the control circuit, wherein
the control circuit is arranged to turn the loading circuit on after a reset state of the control circuit is released by the voltage detection circuit, turn the loading circuit off further after a lapse of a certain period, and carry out the predetermined function, and
power consumption of the loading circuit is set so that the sum of the power consumption of the loading circuit and power consumption of the control circuit for a certain period after the reset state is released is greater than or equal to the maximum level of the power consumption of the control circuit.

7. Anon-contact IC card comprising:

an antenna for receiving an electromagnetic wave;

a rectifier circuit for rectifying an alternating current generated from the electromagnetic wave received by the antenna;

a regulator for regulating a direct current voltage outputted from the rectifier circuit to a constant level;

a control circuit for receiving power supply from the regulator and executing a predetermined function;

a voltage detection circuit for detecting an output voltage of the regulator and resetting the control circuit or releasing a reset state of the control circuit according to the detection result; and

a loading circuit for receiving power supply from the regulator and consuming constant power at an on state, arranged to be controllably turned on and off by the voltage detection circuit, wherein

the voltage detection circuit is arranged to turn the loading circuit on after releasing a reset state of the control circuit, and turn the loading circuit off further after a lapse of a certain period,

the control circuit is arranged to carry out the predetermined function after the lapse of a certain period from the release of the reset state by the voltage detection circuit, and

power consumption of the loading circuit is set so that the sum of the power consumption of the loading circuit and power consumption of the control circuit for a certain period after the reset state is released is greater than or equal to the maximum level of the power consumption of the control circuit.

Fig. 1

Fig. 2

Fig. 3

EP 1 752 914 A1

```
                    ┌──────────────┐
                    │    START     │
                    └──────┬───────┘
                           │ ◄─────────────────────┐
              ┌────────────▼─────────────┐          │
              │        (State 1)         │          │
              │  Control Circuit: RESET  │          │
              │   Loading Circuit: OFF   │          │
              └────────────┬─────────────┘          │
                           │                        │
                      ◄────▼────►         NO        │
                      VIN ≧ VA'  ────────────────►  │
                      ◄─────────►                   │
                           │ YES                    │
              ┌────────────▼──────────────────┐     │
              │          (State 2)            │     │
              │ Control Circuit:RELEASED FROM │     │
              │            RESET              │     │
              │     Loading Circuit: OFF      │     │
              └────────────┬──────────────────┘     │
                           │                        │
                      ◄────▼────►         NO        │
                      VIN ≧ Vref ────────────────►  │
                      ◄─────────►                   │
                           │ YES                    │
              ┌────────────▼──────────────────┐     │
              │          (State 3)            │     │
              │ Control Circuit: RELEASED     │     │
              │          FROM RESET           │     │
              │      Loading Circuit: ON      │     │
              └────────────┬──────────────────┘     │
                           │                        │
                      ◄────▼────►         NO        │
                      VIN ≧ Vref ────────────────►──┘
                      ◄─────────►
                           │ YES
              ┌────────────▼──────────────────┐
              │          (State 4)            │
              │ Control Circuit: RELEASED     │
              │          FROM RESET           │
              │     Loading Circuit: OFF      │
              └────────────┬──────────────────┘
                           │
                      ◄────▼────►
                      VIN ≧ Vref
                      ◄─────────►
                           │
              ┌────────────▼──────────────────┐
              │          (State 5)            │
              │ Control Circuit: MAIN PROCESS │
              │     Loading Circuit: OFF      │
              └────────────┬──────────────────┘
                           │
                    ┌──────▼───────┐
                    │     END      │
                    └──────────────┘
```

Fig. 4

16

Fig. 5

Fig. 6

Fig. 7

Fig. 8

Non-contact IC Card 1

Control Circuit 15

Voltage Detection Circuit 14

Vout

Vcc

Regulator 13

VIN

Rectifier Circuit 12

Receiver Coil 11

Loading Circuit 16

Sc

Terminal Device

Transmitter Coil 21

2

Fig. 9

Fig. 10

Transmitter Coil

Terminal Device

Receiver Coil

Rectifier Circuit

VIN

Regulator

Vcc

CPU

Vout

Voltage Detection Circuit

Non-contact IC Card

40

2

21

11

12

13

45

44

EP 1 752 914 A1

22

Fig. 11

| INTERNATIONAL SEARCH REPORT | International application No. |
|---|---|
| | PCT/JP2005/008433 |

| A. CLASSIFICATION OF SUBJECT MATTER |
|---|
| Int.Cl$^7$  G06K19/00, G06F1/00, H02J17/00 |
| According to International Patent Classification (IPC) or to both national classification and IPC |

| B. FIELDS SEARCHED |
|---|
| Minimum documentation searched (classification system followed by classification symbols) |
| Int.Cl$^7$  G06K19/00, G06F1/00 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 8-30752 A  (Dainippon Printing Co., Ltd.),<br>02 February, 1996 (02.02.96),<br>Fig. 2<br>(Family: none) | 1-3<br>4-7 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 August, 2005 (10.08.05) | 30 August, 2005 (30.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 752 914 A1**

<table>
<tr><td>INTERNATIONAL SEARCH REPORT</td><td>International application No.<br>PCT/JP2005/008433</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    The search has revealed that the invention of claims 1-3 is not novel since it is disclosed in document JP 8-30752 A (Dainippon Printing Co., Ltd.), 02 February, 1996 (02.02.96), Fig.2 (family none).

    Accordingly, there exists no special technical feature common to all the inventions of claims 1-3, 4-7.
    Consequently, it is obvious that the inventions of claims 1-3, 4-7 do not satisfy the requirement of unity of invention.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐  The additional search fees were accompanied by the applicant's protest.

☒  No protest accompanied the payment of additional search fees.

Form PCT/ISA/210 (continuation of first sheet (2)) (January 2004)

25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8030752 A